Europäisches Patentamt

European Patent Office

Office européen des brevets

(11) Publication number: **0 083 945**
**B1**

(12) # EUROPEAN PATENT SPECIFICATION

(45) Date of publication of patent specification: 07.05.86

(51) Int. Cl.⁴: **H 02 P 5/40**

(21) Application number: 83100177.1

(22) Date of filing: 11.01.83

(54) Method and apparatus of controlling induction motors.

(30) Priority: 11.01.82 JP 1812/82

(43) Date of publication of application:
20.07.83 Bulletin 83/29

(45) Publication of the grant of the patent:
07.05.86 Bulletin 86/19

(84) Designated Contracting States:
DE GB

(56) References cited:
GB-A-1 193 979

Patent Abstracts of Japan vol. 5, no. 171, 30
October 1981

Patent Abstracts of Japan vol. 3, no. 143, 27
November 1979 page 108E154

Patent Abstracts of Japan vol. 6, no. 67, 28
April 1982

(73) Proprietor: Hitachi, Ltd.
5-1, Marunouchi 1-chome
Chiyoda-ku Tokyo 100 (JP)

(72) Inventor: Nagase, Hiroshi
2805-197, Miyata-cho Hitachi-shi
Ibaraki-ken (JP)
Inventor: Okuyama, Toshiaki
21-8, Minamidai 1443-8, Suwama
Toukai-mura Ibaraki-ken (JP)

(74) Representative: Strehl, Peter, Dipl.-Ing. et al
Strehl, Schübel-Hopf, Schulz Patentanwälte
Widenmayerstrasse 17 Postfach 22 03 45
D-8000 München 22 (DE)

## Description

The present invention relates to a method and an apparatus for controlling induction motors, according to which the primary current of an induction motor being divided into an excitation component and a torque component is controlled.

A high-response control method for induction motors can be represented by a vector control method, according to which the excitation current component and the torque current component of the primary current of an induction motor are independently controlled, making it possible to obtain speed response characteristics which are comparable with those of a d-c motor. In the vector control method, the phase of magnetic flux of the induction motor must be detected to control the frequency, phase and magnitude of the primary current with the phase of magnetic flux of the induction motor as a reference. To find the phase of magnetic flux, a flux detector may be attached to the induction motor. This, however, is difficult in general-purpose induction motors. In practice, therefore, the slip frequency of the induction motor is calculated to instruct the phase of magnetic flux.

This method, however, presents a problem described below.

The slip frequency $f_s$ is instructed as given by the following relation:

$$f_s = \frac{1}{2\pi}\left(\frac{r_2}{l_2+l_m}\cdot\frac{1}{l_m}\right)l_2 = Kl_2 \qquad (1)$$

where $r_2$, $l_2$ and $l_m$ denote quantities that are proportional to the secondary resistance, secondary leakage reactance and excitation inductance of the induction motor, $l_m$ denotes a quantity proportional to an excitation current component of the primary current, and $l_2$ denotes a quantity proportional to a torque current component.

The intensity of the magnetic flux usually remains constant. That is, the excitation current component $l_m$ remains constant, and the slip frequency $f_s$ is given by a relation $f_s = Kl_2$ and varies in proportion to the current instruction $l_2$ that corresponds to the torque instruction. Here, a constant K is a quantity which is related to the constants ($r_2$, $l_2$, $l_m$, ...) of the induction motor. Therefore, the constant K must be determined to be in agreement with the constants of the induction motor.

However, it is difficult to bring the constant K set in the control circuit into agreement with the real motor constants. Moreover, since the motor constants vary depending upon the operation conditions, it is difficult to determine the constant K set in the control circuit in agreement with the real motor constants under operation.

To solve this problem, a method has been proposed according to which the secondary resistance $r_2$ of an induction motor is measured or is indirectly found by calculation, to change a parameter in the vector calculation, which is related to the secondary resistance $r_2$ in response to the change thereof.

In practice, however, it is difficult to measure the temperature of the rotor due to the nature of its construction. Furthermore even when such measurement is possible, it will be imprecise. Indirect measurement of temperature by calculation is imprecise, too.

Moreover, the relation between the temperature and the secondary resistance $r_2$, and the relation between the secondary resistance $r_2$ and the intensity of the magnetic flux, differ depending upon the individual induction motors. To set such relations, therefore, the motors must be investigated beforehand, which is a very cumbersome operation. Further, it is difficult to precisely establish the relations. In addition to the secondary resistance $r_2$, the excitation inductance $l_m$ which affects the intensity of magnetic flux, undergoes a change depending upon the frequency and the temperature. Therefore, it is difficult to set the slip frequency at the optimum value, and it is not possible to obtain a magnetic flux of the required intensity. Consequently, it becomes difficult to control the induction motor maintaining good response characteristics, though this should be the main feature of the vector control method.

The present invention aims at eliminating the above-mentioned defects, and its object is to provide a method and an apparatus of controlling induction motors, which are capable of setting the slip frequency to the optimum value thereby to realize a control maintaining good response characteristics.

This object is solved by a method and an apparatus for controlling induction motors according to claims 1 and 2, wherein the following steps are executed: Detecting a difference between an instruction value indicative of the desired magnetic flux and a value indicative of the actual magnetic flux of the induction motor, determining a slip frequency correction value on the basis of the detected difference and of an instruction value evaluated from the torque component of the primary current, and controlling the slip frequency of the induction motor so as to become equal to the sum of a slip frequency instruction value and the slip frequency correction value.

Brief description of the drawings:
Figs. 1, 6 and 8 are diagrams showing embodiments of the present invention;
Fig. 2 is a diagram illustrating in detail portions of Figs. 1 and 6;
Fig. 3 is a diagram illustrating the operation of Figs. 1 and 6;
Fig. 4 is a diagram showing the relation between the magnetic flux and the slip frequency;
Fig. 5 is a vector diagram for illustrating the effects of the present invention; and
Fig. 7 is a diagram showing the relation between the ratio of the excitation current component $I_m$ of the primary current of the induction motor and an instruction value $I_m*$ thereof and the ratio of a value $\Delta r_2$ of the secondary resistance change and the value $r_2$ of the secondary resistance.

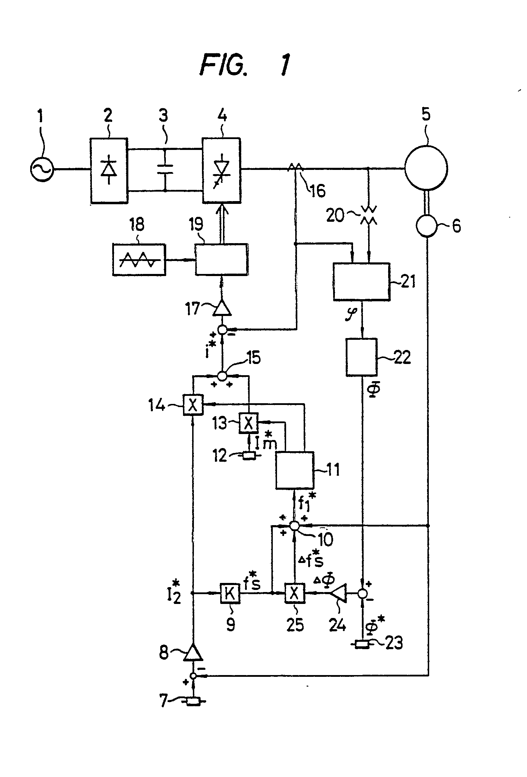

Fig. 1 illustrates an embodiment of the present invention, in which reference numeral 1 denotes an alternating-current power source, 2 denotes a rectifier for converting the alternating current into a direct current, 3 denotes a capacitor which restrains the pulsation of voltage in the d-c circuit, 4 denotes an inverter which produces a-c power of a variable voltage and a variable frequency, 5 denotes an induction motor which is driven by the inverter 4, 6 denotes a speed detector which detects the running speed of the induction motor 5, 7 denotes a speed setting device which issues an instruction for the running speed of the induction motor 5, 8 denotes a speed control circuit responsive to the difference between the outputs of the speed setting device 7 and the speed detector 6, the output of the speed control circuit 8 serving as a torque instruction signal $I_2*$ which determines the torque current flowing into the induction motor, 9 denotes a slip frequency operation unit which performs calculation according to equation (1) to produce a slip frequency instruction signal $f_s*$, 10 denotes an adder which adds the output signals of the slip frequency operation unit 9, speed detector 6 and multiplier 25 which will be mentioned later, the output signal of the adder 10 serving as a signal to determine the primary frequency $f_1*$ of the induction motor 5, 11 denotes an oscillator which produces two-phase sinusoidal waves of the signal $f_1*$ of the primary frequency produced by the adder 10, 12 denotes an excitation current component setting device which produces a predetermined excitation current component instruction $I_m*$, 13 and 14 denote multipliers, 15 denotes an adder which produces a signal that dictates the instantaneous value i of the primary current of the induction motor 5, 16 denotes a current detector which detects the instantaneous value of the primary current that flows into the induction motor 5, 17 denotes a current control circuit which is responsive to the difference between the outputs of the adder 15 and the current detector 16 and generates a signal which is proportional to the output voltage of the inverter 4, i.e., proportional to the fundamental wave of the primary voltage of the induction motor 5, 18 denotes a triangular wave generator which generates signals of a triangular waveform, and 19 denotes a PWM signal generator which compares the output signals of the current control circuit 17 with the output signals of the triangular wave generator 18 to produce gate signals which turn on and off the main circuit elements in the inverter 4.

Operation of the thus constructed circuit has been widely used, and is hence mentioned below only briefly. The speed control circuit 8 produces a signal which corresponds to the difference between the outputs of the speed setting device 7 and the speed detector 6, i.e., a torque current instruction $I_2*$. The excitation current component setting device 12 produces an excitation current instruction $I_m*$. The slip frequency instruction $f_s*$ has been set by the slip frequency operation unit 9. Therefore, if the slip frequency instruction $f_s*$, the running-speed signal of the induction motor 5 detected by the speed detector 6, and a slip frequency correction signal $\Delta f_s*$ that will be mentioned later, are added by means of the adder 10, the signal produced by the adder 10 generates a primary frequency instruction $f_1*$ for the induction motor 5. Thus, the oscillator 11 produces two-phase sinusoidal wave signals given by $\sin(2\pi f_1*t)$ and $\cos(2\pi f_1*t)$, where t denotes the time.

Upon receipt of the above-mentioned four signals $I_2*$, $I_m*$, $\sin(2\pi f_1 t)$ and $\cos(2\pi f_1 t)$, through the multipliers 13 and 14, the adder 15 produces the following signal $i*$ as an instruction for an instantaneous value of the primary current:

$$i* = I_m*\sin(2\pi f_1 t) + I_2*\cos(2\pi f_1 t)$$
$$= I_1*\sin(2\pi f_1 t \div \theta) \qquad (2)$$

where,
$$I_1* = \sqrt{(I_m*)^2 + (I_2*)^2}$$
$$\theta = \tan^{-1}(I_2*/I_m*) \qquad (3)$$

The current control circuit 17, the triangular wave generator 18 and the PWM signal generator 19 cause the inverter 4 to operate on PWM signals, whereby the primary current varies in proportion to the instruction $i*$.

Thus, the induction motor 5 runs at a speed which corresponds to the speed instruction given by the speed setting device 7.

Parts designated at 20 to 25 in Fig. 1 constitute a circuit which corrects the error of slip frequency instruction $f_s*$ which is set by the slip frequency operation unit 9. Reference numeral 20 represents a voltage detector which detects the primary voltage of the induction motor 5, 21 represents a magnetic flux intensity operation circuit which calculates the instantaneous value $\varphi$ of the magnetic flux of the induction motor 5 relying upon the signals produced by the voltage detector 20 and the current detector 16, 22 denotes a rectifier circuit which finds the intensity $\varphi$ of magnetic flux 23 denotes a flux setting device which produces an instruction $\varphi*$ of the flux intensity $\varphi$, 24 stands for a flux control circuit which produces a signal $\Delta \varphi$ that corresponds to the difference between the outputs of the flux setting device 23 and the rectifier circuit 22, and 25 denotes a multiplier which multiplies the output of the slip frequency operation unit 9 by the output of the flux control circuit 24. The output of the multiplier 25 serves as a signal which is an instruction for the correction quantity $\Delta f_s*$ for the slip frequency instruction $f_s*$.

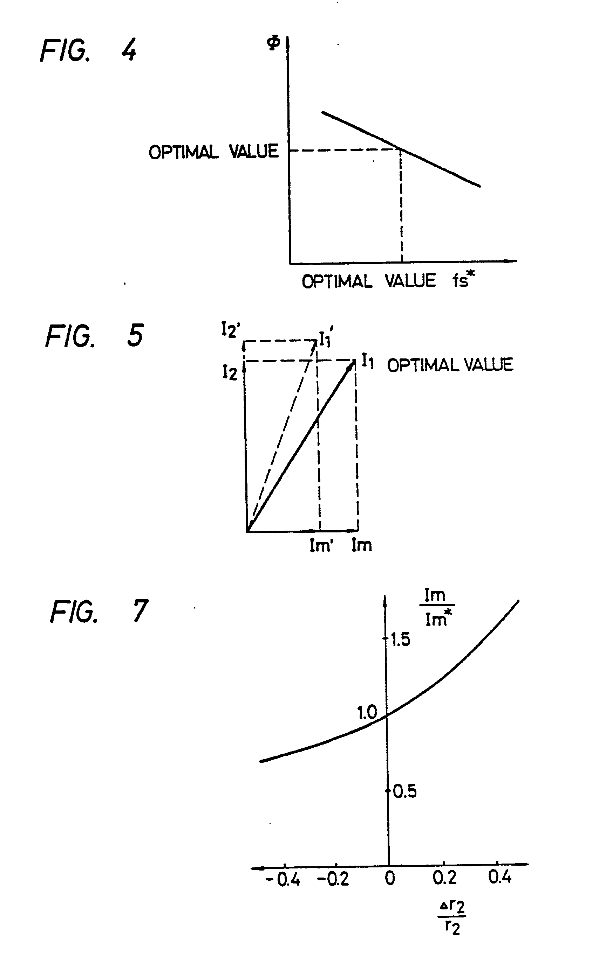

Operation of this circuit will be described below. If an error is contained in the slip frequency instruction $f_s*$ gotten by the slip frequency operation unit 9, the magnetic flux intensity $\varphi$ of the induction motor 5 deviates from the instruction value $\varphi^*$. That is, if the slip frequency instruction $f_s^*$ is set to be greater than an optimum value, the magnetic flux intensity $\varphi$ becomes smaller than a preset value. Conversely, if the slip frequency instruction $f_s^*$ is set to be smaller than the optimum value, the magnetic flux intensity $\varphi$ becomes greater than the preset value. The rectifier circuit 22 generates a signal corresponding to the magnetic flux $\varphi$, and the flux control circuit 24 produces a signal which corresponds to a difference $\Delta\varphi$ between the detected magnetic flux intensity $\varphi$ and the instruction $\varphi^*$ thereof. If the signal $\Delta\varphi$ is multiplied by the slip frequency instruction $f_s^*$ of the slip frequency operation unit 9 by means of the multiplier 25, the resulting output is a correction quantity $\Delta f_s^*$ for the slip frequency. The flux difference $\Delta\varphi$ increases with the increase in the error of the slip frequency instruction $f_s^*$, which results in an increased correction quantity $\Delta f_s^*$. Further, when the slip frequency instruction $f_s^*$ is greater than the optimum value, the magnetic flux intensity $\varphi$ becomes smaller than a preset value $\varphi^*$, and the correction quantity $\Delta f_s^*$ assumes a negative value. Therefore, the primary frequency instruction $f_1^*$ returns to the optimum value. Conversely, if the slip frequency instruction $f_s^*$ is set to be smaller than the optimum value, the correction quantity $\Delta f_s^*$ assumes a positive value, and the primary frequency instruction $f_1^*$ returns to the optimum value. Fig. 4 illustrates the relation between the magnetic flux intensity $\varphi$ and the slip frequency instruction $f_s^*$.

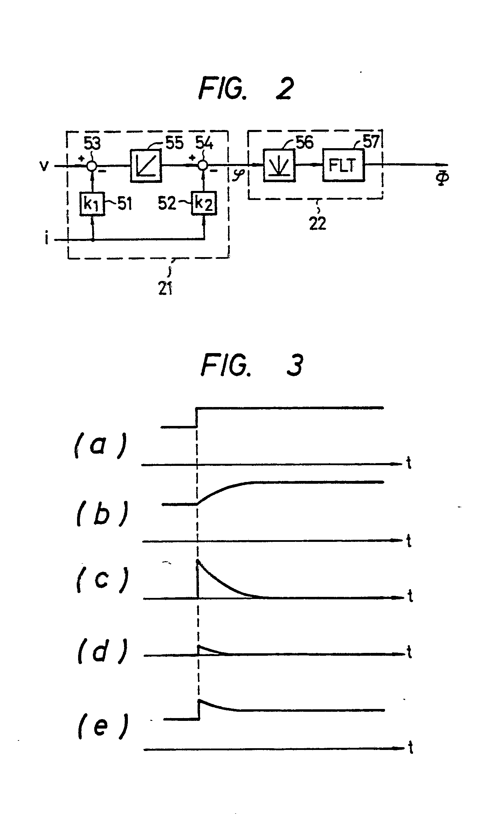

Fig. 2 illustrates a concrete block diagram of the magnetic flux operation circuit 21 and the rectifier circuit 22, in which reference numerals 51 and 52 denote constant setters, 53 and 54 denote subtractors, 55 denotes an integrator, 56 denotes an absolute value circuit for rectifying input signals, and 57 denotes a filter for smoothing ripples contained in the signals produced by the absolute value circuit 56. If instantaneous values of the primary voltage and primary current of the induction motor 5 detected by the voltage detector 20 and current detector 16 are denoted by v and i, the instantaneous magnetic flux intensity $\varphi$ is given by:

$$\varphi = \int \left\{ v - (ri + l \cdot \frac{di}{dt}) \right\} dt$$
$$= \int (v - ri)dt - li$$
$$= \int (v - k_1 i)dt - k_2 i \qquad (4)$$

where r and l denote resistance and leakage inductance of the induction motor 5.

The constant setters 51 and 52 set the constants $k_1$, $k_2$ of equation (4). The subtractors 53, 54 and the integrator 55 perform the calculation of equation (4). After detection of the instantaneous value $\varphi$ of the magnetic flux, the intensity $\varphi$ thereof is detected by means of the absolute value circuit 56 and the filter 57.

Fig. 3 illustrates operation waveforms when the present invention is put into practice. In Fig. 3, diagram (a) shows a speed instruction, diagram (b) shows the running speed of the induction motor 5, diagram (c) shows the slip frequency instruction signal $f_s^*$ produced by the slip frequency operation unit 9, diagram (d) shows the signal produced by the multiplier 25, which is the correction quantity $\Delta f_s^*$ for the slip frequency, and diagram (e) shows a signal which is produced by the adder 10 and which serves as the instruction signal $f_1^*$ for the primary frequency. Output signal $f_s^*$ of the slip frequency operation unit 9 is multiplied in the multiplier 25 by the output signal $\Delta\varphi$ of the magnetic flux control circuit 24 to obtain a correction quantity $\Delta f_s^*$. Therefore, the correction quantity $\Delta f_s^*$ changes following the slip frequency instruction signal $f_s^*$. Therefore, even if the response of the magnetic flux control circuit 24 is delayed, the correction quantity $\Delta f_s^*$ changes responsive to the slip frequency instruction signal $f_s^*$ which corresponds to the required torque as shown in Fig. 3, making it possible to control the torque while maintaining precision and high-response characteristics.

Fig. 5 is a diagram of current vectors when the present invention is adapted, in which $l_1$ denotes a primary current, Im denotes real excitation current component, and $l_2$ denotes a real torque current component. When the circuit of the present invention does not work while the slip frequency instruction signal $f_s^*$ is set to be greater than the optimum value, the primary current $l_1$, excitation current $l_m$ and torque current $l_2$ take the values denoted by broken lines $l_1'$, $l_m'$ and $l_2'$. Thus, the excitation current $l_m$ becomes smaller than the optimum value, and the magnetic flux intensity $\varphi$ becomes smaller than the optimum value. Therefore, the torque may become relatively small, and the speed response characteristics may be low. According to the present invention, however, optimum current vectors can be maintained irrespective of errors in the slip frequency instruction signal $f_s^*$, and the speed can be controlled maintaining good response characteristics.

According to the present invention as described above, the slip frequency can be maintained at the optimum value even when the secondary resistance $r_2$ varies, and the torque produced by the induction motor can be controlled precisely while maintaining high response characteristics.

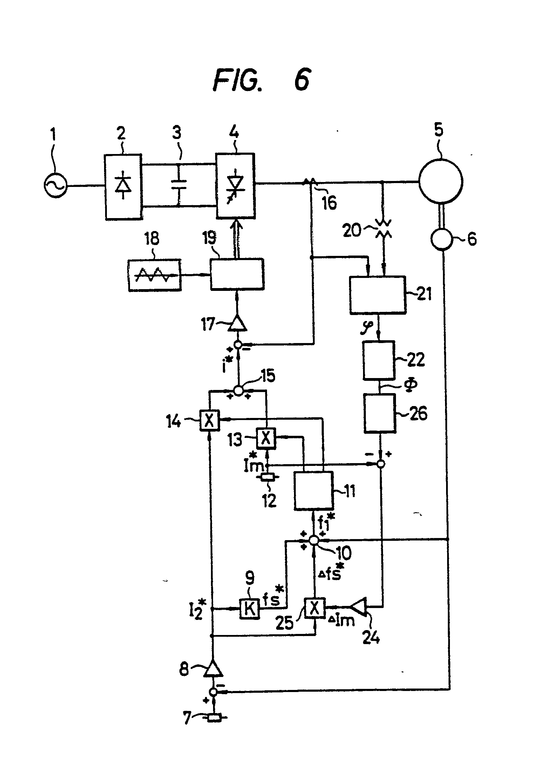

Fig. 6 illustrates another embodiment of the present invention. The embodiment differs from the embodiment shown in Fig. 1 only in the circuit for obtaining a signal $\Delta l_m$ corresponding the difference signal $\Delta\varphi$. In the embodiment of Fig. 6, 26 denotes a detector of the excitation current component $l_m$ of the primary current $l_1$, which has characteristics of

$$\frac{1}{l_m}(1+TS),$$

where $I_m$ and T denote the secondary leakage reactance and the time constant of the induction motor 5.

As well known, the excitation current $I_m$ is given by the following relation:

$$I_m = \frac{\varphi}{I_m}(1+TS) \qquad (5)$$

Accordingly, detector 26 generates a signal $I_m$ corresponding to the signal $\varphi$. The flux control circuit 24 generates the differential signal $\Delta I_m$ between the outputs of the excitation current component setting device 12 and the detector 26. The multiplier 25 multiplies the output of the speed control circuit 8 by the output of the flux control circuit 24 and generates the correction quantity $\Delta f_s^*$. In this case, even if the output of the speed control circuit 8 is substituted for the output of the slip frequency operation unit 9, the correction quantity $\Delta f_s^*$ assumes substantially the same value.

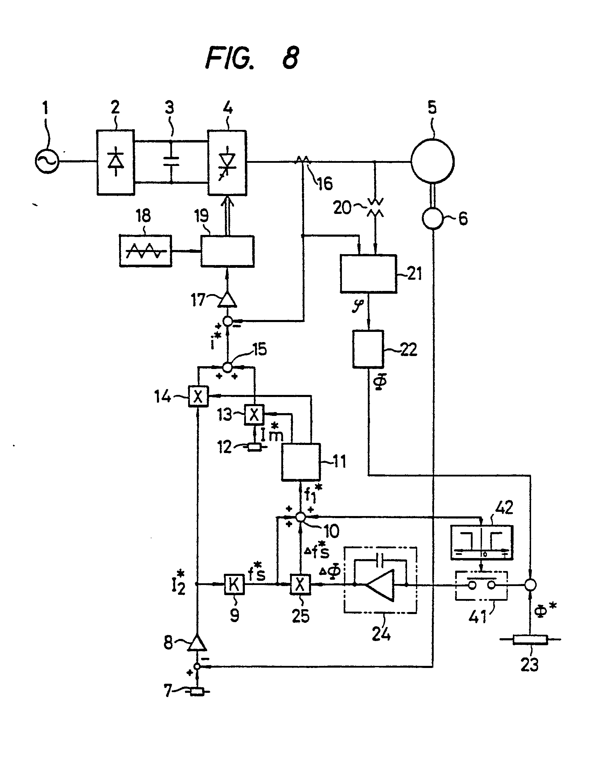

As shown in Fig. 7, when the temperature of the motor 5 changes, namely the ratio

$$\frac{\Delta r_2}{r_2}$$

changes, the ratio

$$\frac{I_m}{I_m^*}$$

changes. The same effect, therefore is gotten by correcting the slip frequency instruction $f_s^*$ according to the difference value $\Delta I_m$.

Fig. 8 shows the diagram of another embodiment of the present invention. In Fig. 8, the flux control circuit 24 has an integration characteristic and is provided with the differential signal $\Delta\varphi$ between the detected flux signal $\varphi$ and the flux instruction signal $\varphi^*$ through a switch means 41. The switch means 41 is controlled by a control signal given by a comparator 42. The comparator 42 is provided with the output of the speed detector 6, and outputs a first control signal for closing the switch means 41 when the speed is larger than a predetermined value, for example 10% of the rated speed of the induction motor, and a second control signal for opening the switch means 41 when speed is equal to or smaller than the predetermined value.

The differential signal $\Delta\varphi$, therefore, is kept at the value which it is given before the switch means 41 is opened. By the embodiment, the control characteristic is improved, because, although the detected flux signal $\varphi$ includes a large error component under a low speed operation of the induction motor, the switch means 41 is opened by the comparator 42 under the low speed operation of the induction motor.

Although the above embodiments have dealt with the case of using the PWM inverter, the present invention can be put into practice by using a current-type inverter or a cycloconverter, as a matter of course.

**Claims**

1. A method for controlling an induction motor by slip frequency control, the primary current of the induction motor (5) being divided into an excitation component (Im) and a torque component (I₂), which are independently controlled, wherein the slip frequency (fₛ) of the induction motor (5) is determined in response to the torque component (I₂), characterized by the following steps:

detecting the difference (Δφ, Δlm) between an instruction value (φ*, Im*) indicative of the desired magnetic flux and a value (φ, Im) indicative of the actual magnetic flux (φ) of said induction motor (5),

determining a slip frequency correction value (Δfₛ*) on the basis of said difference (Δφ, Δlm) and an instruction value (fₛ*, I₂*) derived from the torque component (I₂*), and

controlling the slip frequency (fₛ) of said induction motor (5) to make its value equal to the sum of a slip frequency instruction value (fₛ*) evaluated from the torque component (I₂*) and said slip frequency correction value (Δfₛ*).

2. An apparatus for controlling induction motors, comprising:

means (1, 2) for providing electric energy, an inverter (4) for generating an a-c voltage from the output of said means (1, 2) for providing electric energy wherein the phase and frequency of the inverter (4) are controlled by an instruction signal and the output of the inverter (4) drives an induction motor (5),

speed setting means (7) for said induction motor (5),

speed detecting means (6) for said induction motor (5),

a speed control unit (8) for generating a torque current instruction signal (I₂*) corresponding to the difference between the output of said speed setting means (7) and the output of said speed detecting means (6),

a slip frequency operation unit (9) for generating a slip frequency instruction signal (fₛ*) on the basis of the output (I₂*) of said speed control unit (8), characterized by

means (23; 12) for setting an instruction value (φ*; Im*) indicative of the desired magnetic flux of said induction motor (5),

means (21, 22; 26) for detecting a value (φ; Im) indicative of the actual magnetic flux of said induction motor (5),

means (24) for detecting the difference (Δφ; Δlm) between the instruction value (φ*; Im*) indicative of the desired magnetic flux and the value indicative of the actual magnetic flux (φ; Im),

multiplying means (25) for generating a slip frequency correction signal (Δfₛ*) by multiplying a signal (fₛ*; I₂*) derived from the output of the speed control unit (8) by the output ($\Delta\varphi$; $\Delta$Im) of said means (24) for detecting the difference,

means (10) for generating a primary frequency instruction value ($f_1$*) of the induction motor (5) by adding said outputs of the slip frequency operation unit (9), multiplying means (25) and speed detecting means (6), and

control means (11—19) generating a control signal for the induction motor (5) on the basis of the outputs of said speed control unit (8) and said means (10) for generating the primary frequency instruction value ($f_1$*).

3. The apparatus of claim 2, characterized in that the difference detecting means (24) evaluates the difference ($\Delta\varphi$) between a magnetic flux instruction value ($\varphi$*) and the detected actual magnetic flux value ($\varphi$) of the induction motor (5), and that the multiplying means (25) for generating the slip frequency correction signal ($\Delta f_s$*) multiplies the slip frequency instruction signal ($f_s$*) by the output ($\Delta\varphi$) of said difference detecting means (24).

4. The apparatus of claim 2, characterized in that the difference detecting means (24) evaluates the difference ($\Delta$Im) between an excitation current instruction value (Im*) indicative of the desired magnetic flux ($\varphi$*) of the induction motor (5) and the actual excitation current value (Im) indicative of the actual magnetic flux ($\varphi$) of the induction motor, and that the multiplying means (25) for generating the slip frequency correction signal ($\Delta f_s$*) multiplies the torque current instruction signal ($I_2$*) by the output ($\Delta$Im) of said difference detecting means (24).

5. The apparatus of any of claims 2 to 4, characterized in that the means (1, 2) for providing electric energy is a means for providing a d-c voltage.

6. The apparatus of claim 5, characterized in that the means (1, 2) for providing a d-c voltage comprises an a-c source (1) and a converter (2) for generating a d-c voltage from said a-c source.

**Patentansprüche**

1. Verfahren zur Steuerung eines Induktionsmotors durch Steuern der Schlupffrequenz des Primärstroms des Induktionsmotors (5), der in eine Erregungskomponente (Im) und eine Drehmomentkomponente ($I_2$) aufgeteilt wird, die unabhängig gesteuert werden, wobei die Schlupffrequenz ($f_s$) des Induktionsmotors (5) in Antwort auf die Drehmomentkomponente ($I_2$) bestimmt wird, gekennzeichnet durch folgende Schritte: Erfassen der Differenz ($\Delta\varphi$, $\Delta$Im) zwischen einem Vorgabewert ($\varphi$*, Im*), der den Soll-Magnetfluß angibt, und einem Wert ($\varphi$, Im), der den Ist-Magnetfluß ($\varphi$) des Induktionsmotors (5) angibt,

Bestimmen eines Schlupffrequenz-Korrekturwertes ($\Delta f_s$*) auf Grundlage der Differenz ($\Delta\varphi$, $\Delta$Im) und eines von der Drehmomentkomponente ($I_2$*) abgeleiteten Vorgabewertes ($f_s$*, $I_2$*), und Steuern der Schlupffrequenz ($f_s$) des Induktionsmotors (5), um ihren Wert gleich der Summe eines aus der Drehmomentkomponente ($I_2$*) ermittelten Schlupffrequenz-Vorgabewertes ($f_s$*) und des genannten Schlupffrequenz-Korrekturwertes ($\Delta f_s$*) zu machen.

2. Vorrichtung zur Steuerung von Induktionsmotoren, aufweisend:

Einrichtungen (1, 2) zum Liefern elektrischer Energie,

einen Inverter (4) für die Erzeugung einer Wechselspannung aus der Ausgabe der Einrichtungen (1, 2) zum Liefern elektrischer Energie, wobei die Phase und Frequenz des Inverters (4) durch ein Vorgabesignal gesteuert werden, und die Ausgabe des Inverters (4) einen Induktionsmotor (5) antreibt,

eine Drehzahl-Vorgabeeinrichtung (7) für den Induktionsmotor (5),

eine Drehzahl-Erfassungseinrichtung (6) für den Induktionsmotor (5),

eine Drehzahl-Steuereinheit (8) für die Erzeugung eines Drehmomentstrom-Vorgabesignals ($I_2$*), das der Differenz zwischen der Ausgabe der Drehzahl-Vorgabeeinrichtung (7) und der Ausgabe der Drehzahl-Erfassungseinrichtung (6) entspricht,

eine Schlupffrequenz-Verarbeitungseinheit (9) für die Erzeugung eines Schlupffrequenz-Vorgabesignals ($f_s$*) auf Grundlage der Ausgabe ($I_2$*) der Drehzahl-Steuereinheit (8), gekennzeichnet durch

eine Einrichtung (23; 12) für die Festsetzung eines Vorgabewertes ($\varphi$*; Im*), der den Soll-Magnetfluß des Induktionsmotors (5) angibt,

eine Einrichtung (21, 22; 26) für die Erfassung eines Wertes ($\varphi$; Im), der den Ist-Magnetfluß des Induktionsmotors (5) angibt,

eine Einrichtung (24) für die Erfassung der Differenz ($\Delta\varphi$; $\Delta$Im) zwischen dem Vorgabewert ($\varphi$*; Im*), der den Soll-Magnetfluß angibt, und dem wert, der den Ist-Magnetfluß ($\varphi$; Im) angibt,

eine Multipliziereinrichtung (25) für die Erzeugung eines Schlupffrequenz-Korrektursignals ($\Delta f_s$*) durch Multiplizieren eines von der Ausgabe der Drehzahl-Steuereinheit (8) abgeleiteten Signals ($f_s$*; $I_2$*) mit der Ausgabe ($\Delta\varphi$; $\Delta$Im) der Einrichtung (24) für die Erfassung der Differenz,

eine Einrichtung (10) für die Erzeugung eines Primärfrequenz-Vorgabewertes ($f_1$*) des Induktionsmotors (5) durch Addieren der Ausgaben der Schlupffrequenz-Verarbeitungseinheit (9), der Multipliziereinrichtung (25) und der Drehzahl-Erfassungseinrichtung (6), und

eine Steuereinrichtung (11—19) für die Erzeugung eines Steuersignals für den Induktionsmotor (5) auf Grundlage der Ausgaben der Drehzahl-Steuereinheit (8) und der Einrichtung (10) für die Erzeugung des Primärfrequenz-Vorgabewertes ($f_1$*).

3. Vorrichtung nach Anspruch 2, dadurch gekennzeichnet, daß die Differenz-Erfassungseinrichtung (24) die Differenz ($\Delta\varphi$) zwischen einem Magnetfluß-Vorgabewert ($\varphi$*) und dem erfaßten tatsächlichen Magnetfluß-Wert ($\varphi$) des Induktionsmotors (5) ermittelt, und daß die Multipliziereinrichtung (25) für die Erzeugung des Schlupffrequenz-Korrektursignals ($\Delta f_s^*$) das Schlupffrequenz-Vorgabesignal ($f_s^*$) mit der Ausgabe ($\Delta\varphi$) der Differenz-Erfassungseinrichtung (24) multipliziert.

4. Vorrichtung nach Anspruch 2, dadurch gekennzeichnet, daß die Differenz-Erfassungseinrichtung (24) die Differenz ($\Delta Im$) zwischen einem Erregungsstrom-Vorgabewert ($Im^*$), der den Soll-Magnetfluß ($\varphi^*$) des Induktionsmotors (5) angibt, und dem tatsächlichen Erregungsstromwert ($Im$) ermittelt, der den Ist-Magnetfluß ($\varphi$) des Induktionsmotors angibt, und daß die Multipliziereinrichtung (25) für die Erzeugung des Schlupffrequenz-Korrektursignals ($\Delta f_s^*$) das Drehmomentstrom-Vorgabesignal ($I_2^*$) mit der Ausgabe ($\Delta Im$) der Differenz-Erfassungseinrichtung (24) multipliziert.

5. Vorrichtung nach einem der Ansprüche 2 bis 4, dadurch gekennzeichnet, daß die Einrichtung (1, 2) für die Lieferung elektrischer Energie eine Einrichtung für die Lieferung einer Gleichspannung ist.

6. Vorrichtung nach Anspruch 5, dadurch gekennzeichnet, daß die Einrichtung (1, 2) für die Lieferung einer Gleichspannung eine Wechselspannungsquelle (1) und einen Umformer (2) für die Erzeugung einer Gleichspannung von der Wechselspannungsquelle aufweist.

**Revendications**

1. Procédé pour commander un moteur à induction par commande de la fréquence de glissement, le courant primaire du moteur à induction (5) étant divisé en une composante d'excitation ($Im$) et une composante de couple ($I2$)₁ qui sont commandés indépendamment, dans lequel la fréquence de glissement ($f_s$) du moteur à induction (5) est déterminée en réponse à la composante de couple ($I2$), caractérisée par les opérations suivantes:

détection de la différence ($\Delta\varphi$, $\Delta Im$) entre une valeur de commande ($\varphi^*$, $Im^*$) correspondant au flux magnétique désiré et une valeur ($\varphi$, $Im$) correspondant au flux magnétique réel ($\varphi$) dudit moteur à induction (5),

détermination d'une valeur de correction de la fréquence de glissement ($\Delta f_s^*$) d'après ladite différence ($\Delta\varphi$, $\Delta Im$) et d'après une valeur de commande ($f_s^*$, $I_2^*$) déduite de la composante de couple ($I_2^*$), et

commande de la fréquence de glissement ($f_s$) dudit moteur à induction (5) pour rendre sa valeur égale à la somme d'une valeur de commande de la fréquence de glissement ($f_s^*$) évaluée d'après la composante de couple ($I_2^*$) et de la valeur de correction de la fréquence de glissement ($\Delta f_s^*$).

2. Appareil pour commander des moteurs à induction comprenant:

des moyens (1, 2) pour fournir de l'énergie électrique,

un onduleur (4) pour générer une tension alternative à partir de la sortie desdits moyens (1, 2) d'application de l'énergie électrique, dans lequel la phase et la fréquence de l'onduleur (4) sont commandées par un signal de commande et la sortie de l'onduleur (4) excite un moteur à induction (5),

des moyens détecteurs de la vitesse (6) dudit moteur à induction (5),

une unité de commande de vitesse (8) pour générer un signal de commande de courant de couple ($I_2^*$) correspondant à la différence entre la sortie desdits moyens de réglage de vitesse (7) et la sortie desdits moyens détecteurs de vitesse (6),

une unité de commande de la fréquence de glissement (9) pour générer un signal de commande de la fréquence de glissement ($f_s^*$) d'après la sortie ($I_2^*$) de ladite unité de commande de vitesse (8), caractérisé par

des moyens (23; 12) d'établissement d'une valeur de commande ($\varphi^*$; $Im^*$) correspondant au flux magnétique désiré dans ledit moteur d'induction (5),

des moyens (21, 22; 26) pour détecter une valeur ($\varphi$; $Im$) correspondant au flux magnétique réel à l'intérieur du moteur à induction (5),

des moyens (24) pour détecter la différence ($\Delta\varphi$; $\Delta Im$) entre la valeur de commande ($\varphi^*$; $Im^*$) correspondant au flux magnétique désiré et la valeur correspondant au flux magnétique réel ($\varphi$; $Im$),

des moyens multiplicateurs (25) pour générer un signal de correction de fréquence de glissement ($\Delta f_s^*$) en multipliant un signal ($f_s^*$; $I_2^*$) déduit de la sortie de l'unité de commande de vitesse (8), par la sortie ($\Delta\varphi$; $\Delta Im$) desdits moyens (24) de détection de la différence,

des moyens (10) pour générer une valeur de commande de fréquence primaire ($f_1^*$) du moteur à induction (5) en ajoutant lesdites sorties de l'unité de génération de la fréquence de glissement (9), des moyens multiplicateurs (25) et des moyens détecteurs de vitesse (6), et

des moyens de commande (11—19) générant un signal de commande pour le moteur à induction (5) d'après les sorties de ladite unité de commande de vitesse (8) et desdits moyens (10) de génération de la valeur de commande de fréquence primaire ($f_1^*$).

3. Appareil selon la revendication 2, caractérisé en ce que les moyens détecteurs de différence (24) évaluent la différence ($\Delta\varphi$) entre une valeur de commande du flux magnétique ($\varphi^*$) et la valeur du flux magnétique réel détecté ($\varphi$) du moteur à induction (5), et en ce que les moyens multiplicateurs (25) pour générer le signal de correction de la fréquence de glissement ($\Delta f_s^*$) multiplient le signal de commande de fréquence de glissement ($fs^*$) par la sortie ($\Delta\varphi$) desdits moyens détecteurs de différence (24).

4. Appareil selon la revendication 2, caractérisé en ce que les moyens détecteurs de différence (24) évaluent la différence ($\Delta Im$) entre une valeur de commande du courant d'excitation ($Im^*$) correspondant au flux magnétique désiré ($\varphi^*$) dans le moteur à induction (5) et la valeur réelle du courant d'excitation ($Im$) correspondant au flux magnétique réel ($\varphi$) à l'intérieur du moteur à induction, et en ce que les moyens multiplicateurs (25) pour générer le signal de correction de fréquence de glissement ($\Delta f_s^*$) multiplient le signal de commande du courant de couple ($I_2^*$) par la sortie ($\Delta Im$) desdits moyens détecteurs de différence (24).

5. Appareil selon l'une des revendications 2 à 4, caractérisé en ce que les moyens (1, 2) pour délivrer une énergie électrique sont des moyens pour délivrer une tension continue.

6. Appareil selon la revendication 5, caractérisé en ce que les moyens (1, 2) pour délivrer une tension continue comprennent une source de tension alternative (1) et un convertisseur (2) pour générer une tension continue à partir de ladite source de courant alternatif.

# FIG. 1

1

# FIG. 2

# FIG. 3

(a)

(b)

(c)

(d)

(e)

FIG. 4

OPTIMAL VALUE

Φ

OPTIMAL VALUE $ts^*$

FIG. 5

$I_2'$  $I_1'$

$I_2$  $I_1$  OPTIMAL VALUE

Im'  Im

FIG. 7

$\dfrac{Im}{Im^*}$

1.5

1.0

0.5

−0.4  −0.2  0  0.2  0.4

$\dfrac{\Delta r_2}{r_2}$

3

FIG. 6

FIG. 8